# EUROPEAN PATENT SPECIFICATION

(11) **EP 4 639 008 B1**
(45) Date of publication and mention of the grant of the patent: **02.12.2026**
(21) Application number: 23837785.7
(22) Date of filing: 20.12.2023
(51) Int. Cl.: F16L 37/32

(54) **QUICK COUPLING WITH FRONTAL DECOMPRESSION SYSTEM**
SCHNELLKUPPLUNG MIT FRONTDEKOMPRESSION
RACCORD RAPIDE À SYSTÈME DE DÉCOMPRESSION FRONTALE

(30) Priority: 20.12.2022 IT 202200026079
(43) Date of publication of application: 29.10.2025
(73) Proprietor: FASTER S.r.l., 26027 Rivolta d'Adda (CR) (IT)
(72) Inventor: SORBI, Roberto, 26027 RIVOLTA D'ADDA (CR) (IT); RUSCONI, Paolo, 26027 RIVOLTA D'ADDA (CR) (IT)
(74) Representative: Bianchetti & Minoja with Trevisan & Cuonzo IPS SRL
(86) International application number: PCT/IB2023/063006
(87) International publication number: WO 2024/134529

(56) References cited:
- AU-A- 5 969 465
- CN-U- 203 189 931
- GB-A- 2 431 453

## Description

### FIELD OF THE INVENTION

The present invention relates to a quick coupling for pressurised fluids provided with a frontal decompression system.

More specifically, the quick coupling according to the present invention is a quick coupling according to the ISO 7241 interchangeability standard.

Even more specifically, the coupling configuration according to the present invention is particularly designed to obtain a coupling of the ISO 7241 type with a ¼ inch (1/4") size.

Compared to the state of the art, the quick coupling with frontal decompression system according to the present invention has simpler and fewer components, in particular of the frontal decompression valve, which allows to obtain *sizes* even smaller than ½ inch (1/2"), which cannot be obtained with the currently known types of valves.

### BACKGROUND ART

In the state of the art of oleodynamic applications it is well known to connect a hydraulic line on the machine side and a hydraulic line on the user side using quick couplings, respectively female (usually on the machine side) and male (usually on the user side).

Among the many types of couplings, quick couplings according to ISO 7241 are known, which provide the possibility of decompressing the line by means of a frontal decompression valve that is separate from the main sealing valve.

Such couplings are known from CN 203 189 931 U, AU 59694 65 A or GB 2 431 453 A.

Currently, the frontal valve decompression system that equips known-type couplings according to ISO 7241, a system required to proceed with the coupling manoeuvre even when there is residual pressure in the coupling (particularly in the male coupling), is made on male couplings by providing a frontal micro-valve, however everything shown herein with reference to a male coupling can also apply to a female coupling, and vice versa.

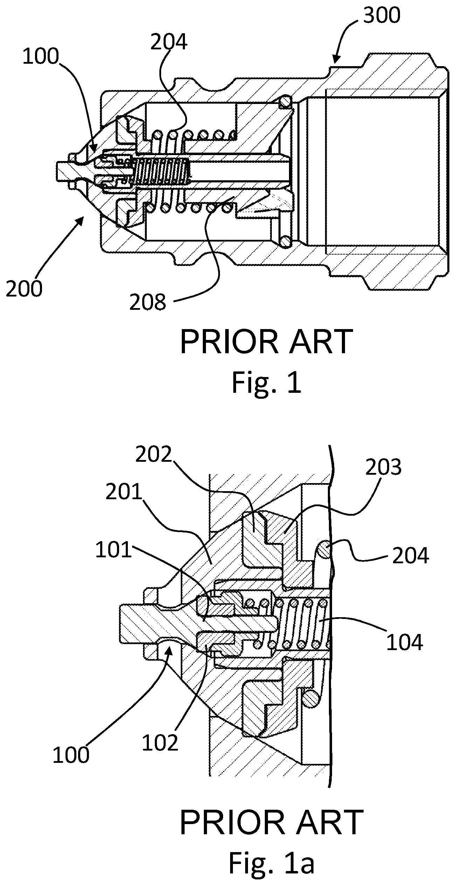

An example of a known-type coupling **300** comprising a frontal decompression system also of the known type is shown in the attached Figures 1 and 1A comprising a micro-valve **100.** In this type of coupling of the known type, therefore, the micro-valve decompression system **100** and the main sealing system comprising the main sealing valve **200** are two separate and independent systems, each with its own valve body **101, 201,** its own gasket **102, 202,** its own stuffing box **103, 203** and its own actuation spring **104, 204.**

The frontal decompression micro-valve of the known type **100** is normally mounted coaxially inside the main sealing valve **200** which in turn is held in the closing position by said actuation spring **204** acting between said stuffing box **203** and a striker body **208** integral with the main body of the coupling, and this implies that the entire decompression system must have limited dimensions, as the size of the sealing system decreases.

Due to these dimensional characteristics, this solution has only been successfully implemented on sizes ½" or larger, while it is essentially impossible to be implemented on smaller coupling sizes.

In fact, due to the small size of the main valve **200,** for the size of e.g. ¼", the micro-valve **100** would have to be so small that it would be almost impossible to be industrially manufactured and assembled.

This drawback therefore makes it impossible to make couplings provided with a small-sized frontal decompression valve.

### SUMMARY OF THE INVENTION

In light of the above, the task of the present invention is to provide a quick coupling provided with a frontal decompression system and having limited dimensions, even smaller than ½".

Within this task, the object of the present invention is to provide a quick coupling provided with a frontal decompression system without a decompression valve, so that it is also possible to make couplings having limited dimensions, even smaller than ½".

Furthermore, the object of the present invention is to provide a quick coupling provided with a frontal decompression system having a simplified structure with a limited number of components.

The above task, as well as the objects mentioned and others that will become clearer later, are achieved by a frontal decompression quick coupling according to the enclosed claim 1.

Other features of the frontal decompression male coupling according to the present invention are set out in the dependent claims, which also form an integral part of the present disclosure.

### LIST OF FIGURES

Further features and advantages of the present invention will be made clearer by the description of a preferred, but not exclusive, embodiment of the frontal decompression quick coupling according to the present invention.

In the present detailed description of a preferred embodiment of the present invention, a male coupling will be shown, but it is understood that the frontal decompression system subject-matter of the present invention may equip either a male or a female coupling.

A preferred embodiment of a male coupling according to the present invention is shown herein by way of example and not limitation with the aid of the accompanying drawings wherein:
Figures 1 and 1A show a male coupling with a known-type frontal decompression system of the state of the art;
Figure 2 shows a section side view with a longitudinal vertical plane of the male coupling with a frontal decompression system according to the present invention;
Figure 3 shows a detailed view of the sealing and decompression system in Figure 2;
Figures 4 to 6 show a section side view of two steps of the functional engagement cycle of the male coupling according to the present invention engaging a female coupling, where pressurised oil is present inside the male coupling;
Figure 7 shows a detail of the male coupling decompression system according to the present invention in a step wherein the decompression system is still closed;
Figure 8 shows a further step of the functional engagement cycle of the male coupling according to the present invention engaging a female coupling in a first step of decompressing the male coupling;
Figure 9 shows a detail of the male coupling decompression system according to the present invention in a first opening step;
Figure 10 shows the final step of the functional cycle of the male coupling according to the present invention engaging a female coupling.

### DETAILED DESCRIPTION OF THE INVENTION

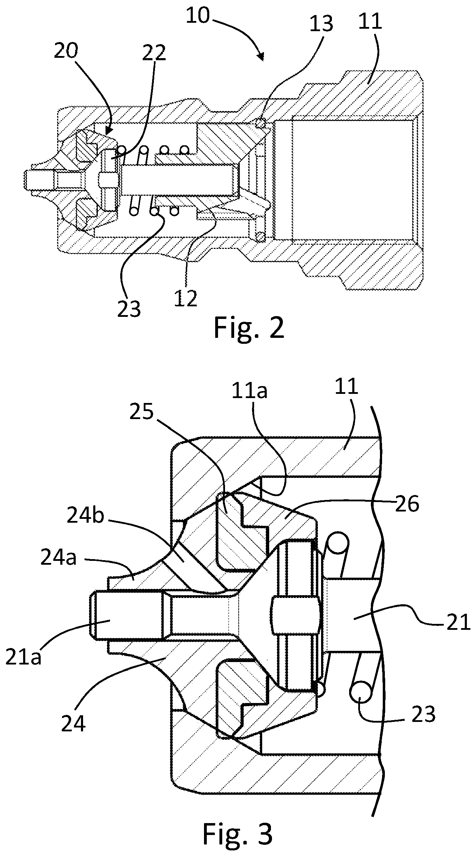

With particular reference to the appended Figures 2 and 3, the male coupling **1** according to the present invention comprises a main body **11** within which a main closing and decompression valve assembly **20** is housed which is slidable in an axial direction with respect to said main body **11,** and movable between a first closing position in which it closes the main valve of the male coupling, and a second opening position which corresponds to the opening of the main valve of the coupling.

Said closing and decompression valve assembly **20** comprises a main stem **21** associated with a striker coil spring **23** which acts between a striker element **22** of said main stem **21** and a support element **12,** which in turn is constrained to said main body **11** by means of a sealing element **13,** preferably consisting in a metal ring.

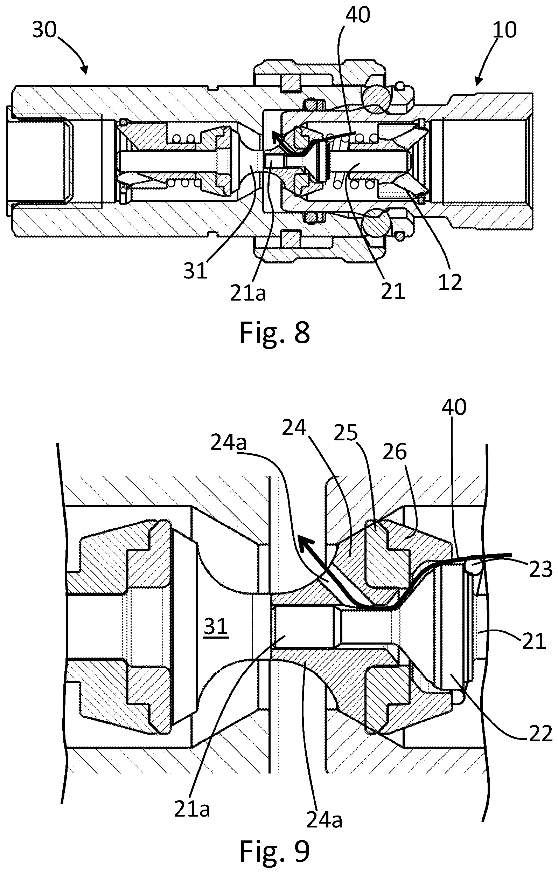

Said closing and decompression valve assembly **20,** which is associated with said main stem **21,** further comprises a main frontal body **24** which performs the main closing of the coupling and is movable in an axial direction with respect to said main stem **21** so that the stem **21,** with its striker element **22,** presses the main frontal body **24** against the inner frontal surface **11a** of said main body **11** when said main stem **21,** and consequently said main frontal body **24,** is in the advanced position corresponding to the closing position of said closing and decompression assembly **20** pushed by the striker coil spring **23,** according to what is visible, for example, in Figure 3, while said main frontal body **24** remains stationary when said stem **21** retracts upon been pushed by the valve body of the female coupling, according to what is visible, for example, in Figures 8, 9 and 10.

With particular reference to the detail of Figure 3, it is noted that said stem **21** frontally comprises an end section **21a** which, when said main closing and decompression valve assembly **20** is in its first closing position protrudes frontally in an axial direction by a section X with respect to the axial end **24a** of said main frontal body **24,** so that an axial thrust on the end section **21a** of the stem leads the stem only **21** to retract while said frontal body **24** can remain stationary. This causes the striker element **22** of said stem **21** to be distanced from said main frontal body **24,** provided the latter is held stationary.

When said main frontal body **24** is in the closing position shown in Figures 3 to 5, therefore, the sealing gasket **25** strikes the inner frontal surface **11a** of said main body **11,** which is held in position by the stuffing box **26** in turn associated with said stem **21.**

As it can be observed, said sealing gasket **25** has the particularity of obtaining the sealing on both the inner frontal surface **11a** of said main body **11,** and on the outer surface of said striker element **22** of said stem **21.**

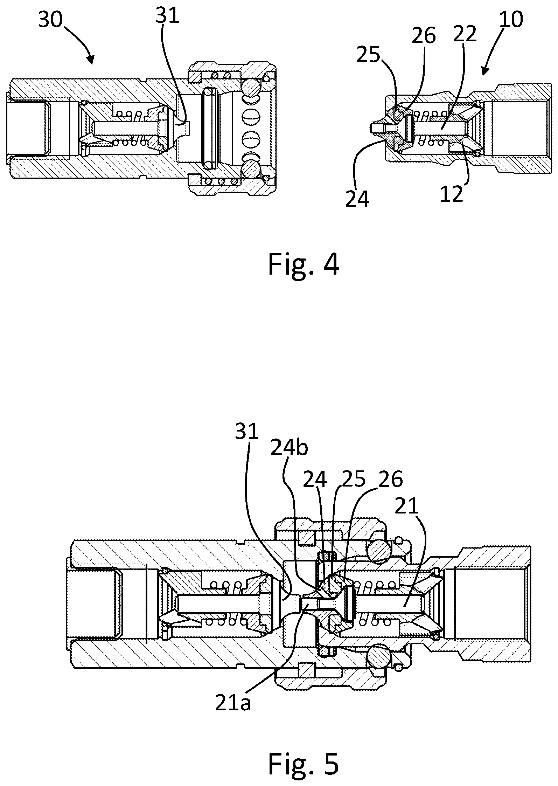

In this condition, the entire closing and decompression assembly **20** keeps the male under pressure in the event of residual pressure present in the male coupling, as shown for example in Figures 4 and 5.

In particular, Figure 4 shows a first step of the connection cycle in which the male **10** is pressurised and the female **30** discharged.

Starting the coupling manoeuvre (Figure 5), the valve **31** of the female coupling **30** and the closing and decompression valve assembly **20** of the male coupling **10** touch each other, but as it can be seen, the valve **31** of the female coupling contacts and pushes only the end **21a** of the stem **21** and does not contact the end **24a** of the main frontal body **24.**

The striker coil spring **23** keeps the frontal body in the closing position, and the male continues to be under pressure.

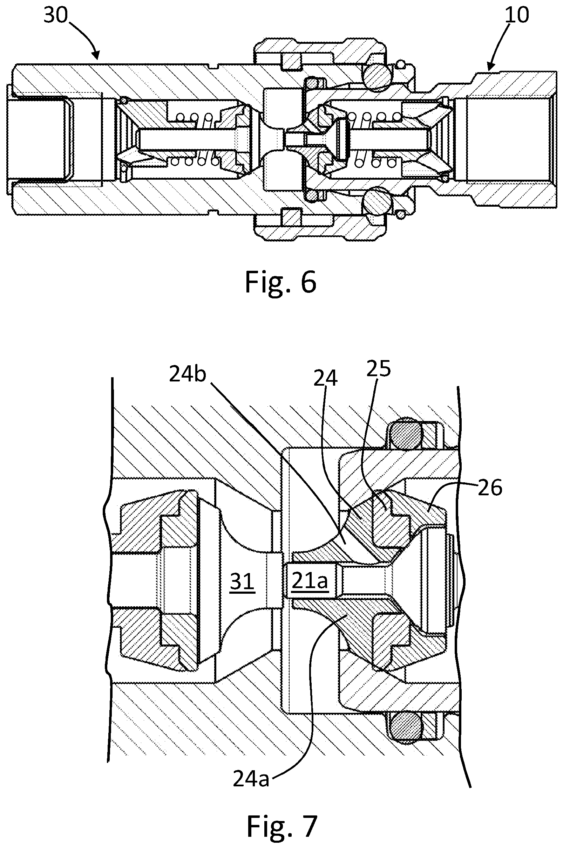

Continuing the manoeuvre of connecting the two couplings, the reference is in Figure 6, the valve **31** of the female coupling **30,** not being under pressure, retracts as pushed by the closing and decompression valve assembly **20** of the male coupling **10** until it reaches the full opening position, while the closing and decompression valve assembly **20** of the male remains closed, the stem **21** and the main frontal body **24** being under the action of thrust exerted by the pressure of the oil trapped in the male which is added to the action of the striker coil spring **23.**

The striker coil spring **23** therefore leads both the main valve, with the main frontal body **24** which seals the sealing gasket **25** on the main body **11,** and the decompression valve with the stem **11,** and in particular its striker element **22,** which contacts the sealing gasket **25,** to close.

Figure 7 shows in detail the situation with the valve **31** of the female coupling **30** open and the closing and decompression valve assembly **20** of the male coupling **10** closed, the valve **31** of the female coupling contacts and pushes again only the end **21a** of the stem **21** and does not contact the end **24a** of the main frontal body **24** which therefore remains stationary.

Still continuing with the connection manoeuvre according to what shown in Figure 8, the valve **31** of the female coupling **30** pushes the end section **21a** of the stem **21** causing the only stem **21** to retract, while the pressurised oil still present within the male **10** exerts a thrust by pressing said main frontal body **24** into the closing position wherein the gasket **25** ensures the sealing.

The striker element **22** of the stem **21** retracts with respect to the main frontal body **24,** which remains stationary as pushed by the oil pressure, by opening a passage (as shown with the arrow **40** in Figures 8 and 9) between the striker element **22** and the gasket **25** with the associated stuffing box **26,** which allows the pressure trapped in the male to be vented through the passage **24b** that crosses said main frontal body **24** placing the inner volume of said main body **11** in communication with the outside, in particular by conveying the fluid under pressure towards the area in front of the main frontal body **24.**

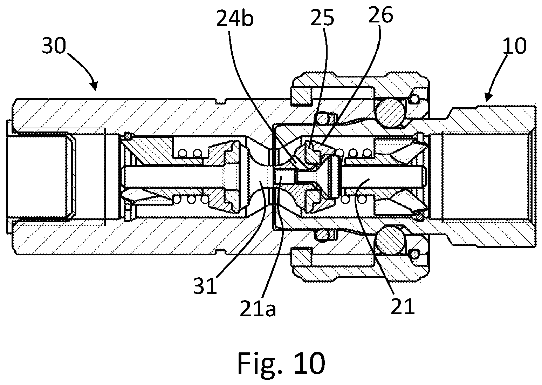

Thanks to the decrease in pressure inside the male coupling, the coupling manoeuvre continues with less resistance and the main front body **24** can also retract as pushed by the valve **31** of the female coupling **30** allowing the connection manoeuvre of the two male coupling **10** and female couplings **30** to be completed as shown in Figure 10.

It has thus been shown how the frontal decompression male coupling according to the present invention achieves its intended task and objects.

In particular, it has been shown how the frontal decompression male coupling according to the present invention, in particular by introducing the closing and decompression valve assembly in place of the traditional micro-decompression valve internally coaxial to the sealing valve, can be made in sizes smaller than ½, in particular it can be made in sizes of ¼".

Furthermore, it has been shown that the frontal decompression male coupling according to the present invention differs from the state of the art as it has fewer components, in particular as it provides a single frontal gasket working simultaneously on two diametrically opposite sealing points, i.e. on the inner frontal surface of the main body and on the outer surface of the stem striker element.

Again, the frontal decompression male coupling according to the present invention requires a single striker spring that moves both the main valve and the decompression, and a single stuffing box.

The closing and decompression valve assembly according to the present invention can be produced industrially in any size provided for by ISO 7241, including sizes smaller than ½", e.g. in ¼" size.

The present invention has been described by way of a non-limiting illustrative example according to preferred embodiments, however, it is understood that variations and/or modifications may be made by a person skilled in the art, without thereby departing from the scope of protection, as defined in the attached claims.

## Claims

1. Frontal decompression quick coupling (10) comprising a main body (11) within which a main closing and decompression valve assembly (20) is housed sliding in an axial direction with respect to said main body (11) between a first closing position in which it performs the closing of the main valve of the coupling, and a second opening position corresponding to the opening of the main valve of the coupling, wherein said main closing and decompression valve assembly (20) comprises a main frontal body (24) supporting a sealing gasket (25) and adapted to perform the main closing of the coupling, and a main stem (21), wherein said main frontal body (24) supports a sealing gasket (25) and is axially movable with respect to said stem (21) so as to allow decompression of the male coupling when said valve assembly (20) is in said closing position in which it performs the closing of the coupling main valve, and wherein, when said main stem (21) and said frontal body (24) are in the closing position of said main closing and decompression assembly (20) said sealing gasket (25) strikes at the same time against both the inner frontal surface (11a) of said main body (11), obtaining the main sealing and closing the coupling, and against the outer surface of said striker element (22) of said stem (21), keeping the decompression valve closed.

2. Frontal decompression quick coupling (10) according to the preceding claim, **characterized in that** said main stem (21) in turn comprises a striker element (22), and **in that** it further comprises a striker coil spring (23) adapted to act between said striker element (22) of said main stem (21) and a support element (12), which in turn is constrained to said main body (11).

3. Frontal decompression quick coupling (10) according to one or more of the preceding claims, **characterized in that** said striker coil spring (23) is configured to exert a thrust on said striker element (22) of said main stem (21) so as to maintain in a closed position both said main frontal body (24) which, with said sealing gasket (25), performs the sealing on the main body (11), and said decompression valve, keeping the outer surface of said striker element (22) of said stem (21) in contact with the sealing gasket (25).

4. Frontal decompression quick coupling (10) according to one or more of the preceding claims, **characterized in that** on said main frontal body (24) a passage (24b) is obtained which passes through said main frontal body (24) placing the inner volume of said main body (11) in communication with the outside, in particular said passage (24b) conveying the fluid under pressure towards the area in front of the main frontal body (24).

5. Frontal decompression quick coupling (10) according to one or more of the preceding claims, **characterized in that** said stem (21) frontally comprises an end section (21a) which, when said main closing and decompression valve assembly (20) is in said closing position, protrudes frontally in an axial direction by a section (X) with respect to the axial end (24a) of said main frontal body (24), so that an axial thrust on the end section (21a) of the stem results in a retraction of the stem (21) only, while said frontal body (24) remains stationary.

6. Frontal decompression quick coupling (10) according to the preceding claim, **characterized in that** said striker element (22) of said stem (21) is configured in such a way that, in the presence of oil under pressure inside said male coupling (10), when a thrust is exerted on said end section (21a) of said stem (21) causing the axial movement of said stem (21) towards the inside of said quick coupling (10) the oil under pressure within said coupling (10) exerts a thrust on said striker element (22) pressing said main frontal body (24) into the closing position wherein the gasket (25) establishes the fluid sealing against the inner frontal surface (11a) of said main body (11).

7. Frontal decompression quick coupling (10) according to the preceding claim, **characterized in that**, in the connection manoeuvre, the valve (31) of the coupling (30) which is coupled in the quick coupling (10) strikes against the end section (21a) of the stem (21) and causes it to retract by a section corresponding to said section (X), while said main frontal body (24) remains stationary as it is pushed by the pressure of the oil inside said coupling which acts on said striker element (22), thus causing the distancing of said gasket (25) and of its stuffing box (26) from the striker element (22) and thus opening a passage for the oil under pressure which is put in communication with the passage (24b) and is discharged into the female coupling.

8. Frontal decompression quick coupling (10) according to the preceding claim, **characterized in that**, once said oil passage is opened to said passage (24b), said main frontal body (24) is configured to retract as pushed by said valve (31) of said coupling (30) which is coupled in the quick coupling (10), allowing the manoeuvre of connecting the two couplings (10, 30) to be completed.

9. Frontal decompression quick coupling (10) according to one or more of the preceding claims, **characterized in that** it further comprises at least one stuffing box (26) associated with said main stem (21) adapted to hold said sealing gasket (25) in position.

## Patentansprüche

1. Schnellkupplung (10) mit frontaler Druckentlastung, umfassend einen Hauptkörper (11), in dem eine Hauptverschluss- und Druckentlastungsventilanordnung (20) untergebracht ist, die in axialer Richtung relativ zu dem Hauptkörper (11) zwischen einer ersten Schließposition, in der sie das Verschließen des Hauptventils der Kupplung bewirkt, und einer zweiten Öffnungsposition, die dem Öffnen des Hauptventils der Kupplung entspricht, wobei die Hauptverschluss- und Druckentlastungsventilanordnung (20) einen vorderen Hauptkörper (24), der eine Dichtung (25) stützt und zur Verschließung der Kupplung ausgelegt ist, sowie einen Hauptschaft (21) umfasst, wobei der vordere Hauptkörper eine Dichtung (25) stützt und in axialer Richtung relativ zum Schaft (21), um eine Druckentlastung der Steckkupplung zu ermöglichen, wenn sich die Ventilanordnung (20) in der Schließposition befindet, in der sie das Verschließen des Hauptventils der Kupplung durchführt, und wobei, wenn sich der Hauptschaft (21) und der Frontkörper (24) in der Schließposition der Hauptverschluss- und Druckentlastungsanordnung (20) befinden, die Dichtung (25) gleichzeitig sowohl an der inneren Frontfläche (11a) des Hauptkörpers (11) an, wodurch die Hauptdichtung erhalten und die Kopplung verschlossen wird, als auch an die Außenfläche des Anschlagelements (22) des Schafts (21) an, wodurch das Druckentlastungsventil verschlossen bleibt.

2. Schnellkupplung (10) mit frontaler Druckentlastung nach dem vorstehenden Anspruch, **dadurch gekennzeichnet, dass** der Hauptschaft (21) seinerseits ein Schlagelement (22) umfasst und dass er weiter eine Schlagfeder (23) umfasst, die so angepasst ist, dass sie zwischen dem Schlagelement (22) des Hauptschafts (21) und einem Stützelement (12) wirkt, welches seinerseits am Hauptkörper befestigt ist (11) befestigt ist.

3. Schnellkupplung (10) mit frontaler Druckentlastung nach einem oder mehreren der vorstehenden Ansprüche, **dadurch gekennzeichnet, dass** die Schlagelementspule (23) so konfiguriert ist, dass sie einen Schub auf das Schlagelement (22) des Schafts (21) ausübt, um sowohl den vorderen Hauptkörper (24), der zusammen mit der Dichtungsmanschette (25) die Abdichtung am Hauptkörper (11) durchführt, als auch das Druckentlastungsventil in einer geschlossenen Position hält, wobei die Außenfläche des Schlagelements (22) des Schafts (21) in Berührung mit der Dichtungsmanschette (25) ist.

4. Schnellkupplung (10) mit frontaler Druckentlastung nach einem oder mehreren der vorstehenden Ansprüche, **dadurch gekennzeichnet, dass** an dem vorderen Hauptkörper (24) ein Durchgang (24b) ausgebildet ist, der durch den vorderen Hauptkörper (24) verläuft und den Innenraum des Hauptkörpers (11) mit der Außenwelt verbindet, wobei insbesondere der Durchgang (24b), das das unter Druck stehende Fluid in den Bereich vor dem vorderen Hauptkörper (24) leitet.

5. Schnellkupplung (10) mit frontaler Druckentlastung nach einem oder mehreren der vorstehenden Ansprüche, **dadurch gekennzeichnet, dass** der Schaft (21) an seiner Vorderseite einen Endabschnitt (21a) aufweist, der, wenn sich die Hauptverschluss- und Druckentlastungsventilanordnung (20) in der Verschlussposition befindet, in axialer Richtung um einen Abschnitt (X) gegenüber dem axialen Ende (24a) des vorderen Hauptkörpers (24) in axialer Richtung um einen Abschnitt (X) vorsteht, so dass ein axialer Schub auf den Endabschnitt (21a) des Schafts lediglich zu einem Zurückziehen des Schafts (21) führt, während der vordere Körper (24) stationär bleibt.

6. Schnellkupplung (10) mit frontaler Druckentlastung nach dem vorstehenden Anspruch, **dadurch gekennzeichnet, dass** das Schlagelement (22) des Schafts (21) derart ausgebildet ist, dass bei Vorhandensein von unter Druck stehendem Öl im Inneren der Steckkupplung (10), wenn ein Schub auf den Endabschnitt (21a) des Schafts (21) ausgeübt wird, der die axiale Bewegung des Schafts (21) in Richtung des Inneren der Schnellkupplung (10) bewirkt, das unter Druck stehende Öl innerhalb der Kupplung (10) einen Schub auf das Schlagelement (22) ausübt, wodurch der vordere Hauptkörper (24) in die Schließposition gedrückt wird, in der die Dichtung (25) die Fluidabdichtung gegenüber der inneren Stirnfläche (11a) des Hauptkörpers (11) herstellt.

7. Schnellkupplung (10) mit frontaler Druckentlastung nach dem vorstehenden Anspruch, **dadurch gekennzeichnet, dass** beim Verbindungsvorgang das Ventil (31) der Kupplung (30), die in die Schnellkupplung (10) eingekuppelt ist, gegen den Endabschnitt (21a) des Schafts (21) stößt und deren Rückzug um einen Abschnitt bewirkt, der dem Abschnitt (X) entspricht, während der vordere Hauptkörper (24) stationär bleibt, da er durch den Druck des Öls im Inneren der Kupplung, der auf das Anschlagelement (22) wirkt, gedrückt wird, wodurch die Dichtung (25) und ihre Stopfbuchse (26) vom Anschlagelement (22) abgehoben werden und somit ein Durchgang für das unter Druck stehende Öl geöffnet wird, das mit dem Durchgang (24b) in Verbindung gebracht und in die Gegenkupplung abgelassen wird.

8. Schnellkupplung (10) mit frontaler Druckentlastung nach dem vorstehenden Anspruch, **dadurch gekennzeichnet, dass** der vordere Hauptkörper (24), sobald der Ölkanal zum Kanal (24b) geöffnet ist, so ausgebildet ist, dass er sich unter dem Druck des Ventils (31) der in die Schnellkupplung (10) eingekuppelten Kupplung (30) zurückzieht, wodurch der Vorgang des Verbindens der beiden Kupplungen (10, 30) abgeschlossen werden kann.

9. Schnellkupplung (10) mit frontaler Druckentlastung nach einem oder mehreren der vorstehenden Ansprüche, **dadurch gekennzeichnet, dass** sie ferner mindestens eine Stopfbuchse (26) umfasst, die dem Hauptschaft (21) zugeordnet ist und dazu ausgelegt ist, die Dichtungsmanschette (25) in ihrer Position zu halten.

## Revendications

1. Raccord rapide à décompression frontale (10) comprenant un corps principal (11) à l'intérieur duquel est logé un ensemble de soupape principale de fermeture et de décompression (20) coulissant dans une direction axiale par rapport audit corps principal (11) entre une première position de fermeture dans laquelle il assure la fermeture de la soupape principale du raccord, et une seconde position d'ouverture correspondant à l'ouverture de la soupape principale du raccord, dans lequel ledit ensemble de soupape principale de fermeture et de décompression (20) comprend un corps frontal principal (24) supportant un joint d'étanchéité (25) et adapté pour assurer la fermeture principale du raccord, et une tige principale (21), dans lequel ledit corps frontal principal supporte un joint d'étanchéité (25) et est mobile axialement par rapport à ladite tige (21) de manière à permettre la décompression du raccord mâle lorsque ledit ensemble de soupape (20) se trouve dans ladite position de fermeture dans laquelle il assure la fermeture de la soupape principale du raccord, et dans lequel, lorsque ladite tige principale (21) et ledit corps frontal (24) se trouvent dans la position de fermeture dudit ensemble principal de fermeture et de décompression (20), ledit joint d'étanchéité (25) vient en contact simultanément contre la surface frontale intérieure (11a) dudit corps principal (11), assurant ainsi l'étanchéité principale et la fermeture du raccord, et contre la surface extérieure dudit élément de frappe (22) de ladite tige (21), maintenant ainsi la soupape de décompression fermée.

2. Raccord rapide à décompression frontale (10) selon la revendication précédente, **caractérisé en ce que** ladite tige principale (21) comprend à son tour un élément de frappe (22), et **en ce qu'**il comprend en outre un ressort hélicoïdal de frappe (23) adapté pour agir entre ledit élément de frappe (22) de ladite tige principale (21) et un élément de support (12), qui est lui-même fixé audit corps principal (11).

3. Raccord rapide à décompression frontale (10) selon l'une ou plusieurs des revendications précédentes, **caractérisé en ce que** ledit ressort hélicoïdal de frappe (23) est configuré pour exercer une poussée sur ledit élément de frappe (22) de ladite tige principale (21) de manière à maintenir en position fermée à la fois ledit corps frontal principal (24) qui, avec ledit joint d'étanchéité (25), assure l'étanchéité sur le corps principal (11), et ladite soupape de décompression, en maintenant la surface extérieure dudit élément de frappe (22) de ladite tige (21) en contact avec le joint d'étanchéité (25).

4. Raccord rapide à décompression frontale (10) selon l'une ou plusieurs des revendications précédentes, **caractérisé en ce que**, sur ledit corps frontal principal (24), est obtenu un passage (24b) qui traverse ledit corps frontal principal (24) en mettant le volume intérieur dudit corps principal (11) en communication avec l'extérieur, en particulier ledit passage (24b) acheminant le fluide sous pression vers la zone située en avant du corps frontal principal (24).

5. Raccord rapide à décompression frontale (10) selon l'une ou plusieurs des revendications précédentes, **caractérisé en ce que** ladite tige (21) comporte à l'avant une section d'extrémité (21a) qui, lorsque ledit ensemble principal de soupape de fermeture et de décompression (20) se trouve dans ladite position de fermeture, fait saillie vers l'avant dans une direction axiale d'une section (X) par rapport à l'extrémité axiale (24a) dudit corps frontal principal (24), de sorte qu'une poussée axiale exercée sur la section d'extrémité (21a) de la tige entraîne uniquement une rétraction de la tige (21), tandis que ledit corps frontal (24) reste immobile.

6. Raccord rapide à décompression frontale (10) selon la revendication précédente, **caractérisé en ce que** ledit élément de frappe (22) de ladite tige (21) est configuré de telle sorte que, en présence d'huile sous pression à l'intérieur dudit raccord mâle (10), lorsqu'une poussée est exercée sur ladite section d'extrémité (21a) de ladite tige (21) provoquant le déplacement axial de ladite tige (21) vers l'intérieur dudit raccord rapide (10), l'huile sous pression à l'intérieur dudit raccord (10) exerce une poussée sur ledit élément de frappe (22), poussant ledit corps frontal principal (24) dans la position de fermeture dans laquelle le joint d'étanchéité (25) assure l'étanchéité aux fluides contre la surface frontale intérieure (11a) dudit corps principal (11).

7. Raccord rapide à décompression frontale (10) selon la revendication précédente, **caractérisé en ce que**, lors de la manœuvre de raccordement, la soupape (31) du raccord (30), qui est couplé au raccord rapide (10), vient heurter la section d'extrémité (21a) de la tige (21) et provoque sa rétraction d'une section correspondant à ladite section (X), tandis que ledit corps frontal principal (24) reste immobile car il est poussé par la pression de l'huile à l'intérieur dudit raccord qui s'exerce sur ledit élément de frappe (22), provoquant ainsi l'écartement dudit joint d'étanchéité (25) et de son presse-étoupe (26) par rapport à l'élément de frappe (22) et ouvrant ainsi un passage pour l'huile sous pression qui est mise en communication avec le passage (24b) et est évacuée dans le raccord femelle.

8. Raccord rapide à décompression frontale (10) selon la revendication précédente, **caractérisé en ce que**, une fois que ledit passage d'huile est ouvert vers ledit passage (24b), ledit corps frontal principal (24) est configuré pour se rétracter sous l'action de ladite soupape (31) dudit raccord (30) qui est couplé au raccord rapide (10), permettant ainsi d'achever la manœuvre de raccordement des deux raccords (10, 30) soit menée à bien.

9. Raccord rapide à décompression frontale (10) selon l'une ou plusieurs des revendications précédentes, **caractérisé en ce qu'**il comprend en outre au moins un presse-étoupe (26) associé à ladite tige principale (21) et adapté pour maintenir ledit joint d'étanchéité (25) en place.
